(19) **Europäisches Patentamt**

**European Patent Office**

**Office européen des brevets**

(11) **EP 1 212 547 B1**

(12) **EUROPÄISCHE PATENTSCHRIFT**

(45) Veröffentlichungstag und Bekanntmachung des Hinweises auf die Patenterteilung:
**19.02.2003  Patentblatt 2003/08**

(51) Int Cl.⁷: **F16H 1/46**

(21) Anmeldenummer: **00988667.2**

(86) Internationale Anmeldenummer:
**PCT/DE00/04258**

(22) Anmeldetag: **28.11.2000**

(87) Internationale Veröffentlichungsnummer:
**WO 01/040680 (07.06.2001 Gazette 2001/23)**

(54) **MEHRSTUFIGES ZAHNRADGETRIEBE**

MULTI-STEP GEARBOX

TRANSMISSION PAR ENGRENAGES A PLUSIEURS ETAGES

(84) Benannte Vertragsstaaten:
**ES FR GB IT**

(30) Priorität: **04.12.1999  DE 19958637**

(43) Veröffentlichungstag der Anmeldung:
**12.06.2002  Patentblatt 2002/24**

(73) Patentinhaber: **Alpha Getriebebau GmbH
97999 Igersheim (DE)**

(72) Erfinder: **BAYER, Thomas
97999 Igersheim (DE)**

(74) Vertreter: **Patentanwalts-Partnerschaft,
Rotermund + Pfusch + Bernhard
Waiblinger Strasse 11
70372 Stuttgart (DE)**

(56) Entgegenhaltungen:
**US-A- 2 053 130**

EP 1 212 547 B1

**Beschreibung**

Die Erfindung betrifft ein mehrstufiges Zahnradgetriebe, das folgende Eigenschaften aufweisen soll

- Eignung zur Übertragung extrem hoher Momente,
- hohe Übersetzung,
- kleine Bauweise,
- kostengünstige Herstellbarkeit.

Ein Getriebe mit in dieser Richtung weisenden Eigenschaften, insbesondere einer in Achsrichtung kompakten Bauweise, ist Gegenstand des Patentanspruchs 1.

Im Vergleich zu diesem erfindungsgemäßen Getriebe fehlen bei einem bereits aus US A-2053130 bekannten Getriebe folgende Merkmale

- das vierte und fünfte Zahnrad rotieren mit einer gegenseitigen festen Verbindung um eine gemeinsame Getriebeachse
- mindestens ein drittes und das vierte Zahnrad kämmen ineinander
- das mindestens eine Planetenrad und das Hohlrad in Richtung der gemeinsamen Getriebeachse sind zwischen dem ersten und dem mindestens einen zweiten Zahnrad einerseits und dem mindestens einen dritten und dem viertem Zahnrad anderseits angeordnet, wozu die Verbindung zwischen dem zweiten und dritten Zahnrad ein diesen Zahnrädern zugeordnetes Planetenrad in dessen Planetenachse durchdringt.

Zweckmäßige und vorteilhafte Ausgestaltungen der Erfindung sind Gegenstand der Unteransprüche.

Ausführungsbeispiele der Erfindung sind in der Zeichnung dargestellt.

Es zeigen

Fig. 1   eine schematische Darstellung des Getriebes,

Fig. 2   eine Ansicht des Getriebes in Fig. 1 auf ausschließlich die ineinander kämmenden ersten und zweiten Zahnräder,

Fig. 3   einen Schnitt durch eine konstruktiv ausgelegte Ausführung des Getriebes nach Fig. 1,

Fig. 4   eine Ansicht in Richtung des Pfeiles IV auf das Getriebe nach Fig. 3.

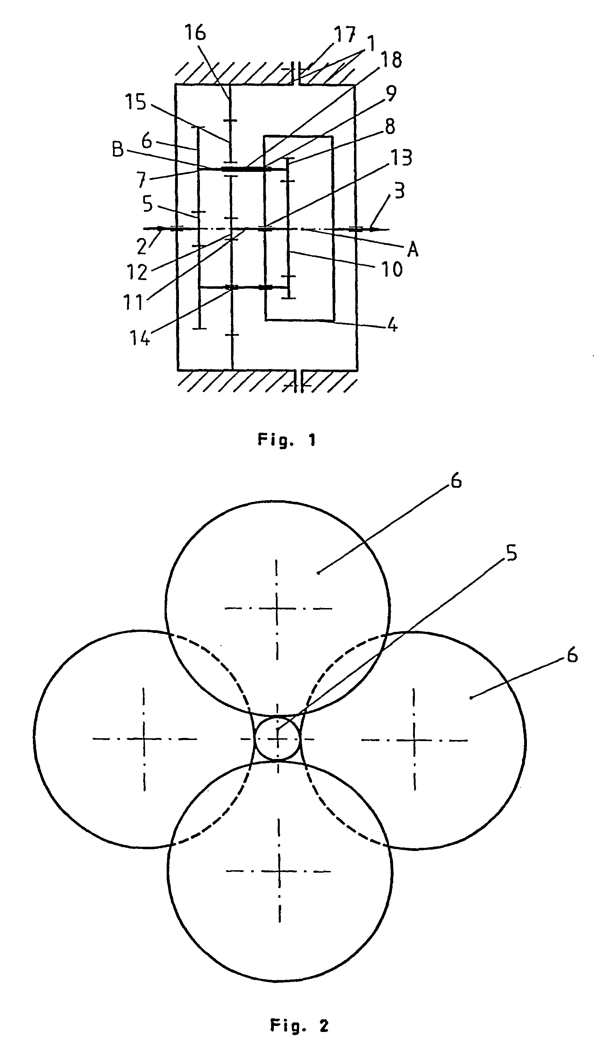

Beschreibung der Figuren 1 und 2:

In einem feststehenden Getriebegehäuse 1 rotieren auf einer gemeinsamen Getriebeachse A eine Eingangswelle 2 und eine Ausgangswelle 3. Die Ausgangswelle 3 ist Bestandteil eines Umlaufträgers 4, dessen Funktion im nachfolgenden noch näher erläutert werden wird.

Fest mit der Antriebswelle 2 verbunden ist ein erstes Zahnrad 5, das in einem zweiten Zahnrad 6 kämmt. Das zweite Zahnrad 6 ist über eine Nabe 7 fest mit einem dritten Zahnrad 8 verbunden. Die Nabe 7 ist drehbar in einem Lager 9 des Umlaufträgers 4 gelagert und rotiert in diesem Lager 9 auf einer Planetenachse B.

Das dritte Zahnrad 8 kämmt in einem vierten Zahnrad 10, das wiederum über eine Nabe 11 fest mit einem fünften Zahnrad 12 verbunden ist. Die Nabe 11 ist in einem Lager 13 des Umlaufträgers 4 gelagert.

Das fünfte Zahnrad 12 treibt ein in einem Lager 14 des Umlaufträgers 4 gelagertes und auf der Planetenachse B rotierendes Planetenrad 15 an, das wiederum in einem fest mit dem Getriebegehäuse 1 verbundenen Hohlrad 16 kämmt. Als radial innere Abstützung des Lagers 14 dient ein funktionell fest mit dem Umlaufträger 4 verbundener Lager-Stützring 18. Das fünfte Zahnrad 12 ist dabei zusammen mit dem Planetenrad 15 sowie dem Hohlrad 16, in dem es kämmt, axial zwischen den Zahnradpaaren 5/6 und 8/10 angeordnet. Durch diese Anordnung der Zahnradpaarungen wird eine besonders schmale Bauweise erreicht.

Bei einem Antrieb der Antriebswelle 2 erfolgt der Abtrieb über die in den Umlaufträger 4 integrierte Abtriebswelle 3.

Bei einer Auslegung der Zahnräder in einer solchen Weise, daß bei ineinander kämmenden Zahnrädern jeweils eine Übersetzung ins Langsame erfolgt, können mit einem solchen Getriebe sehr hohe Übersetzungen erzielt werden. Technisch erreichbar sind ohne weiteres Übersetzungen in einer Größenordnung von i = 200. Dementsprechend sind in einem solchen Getriebe Drehmomenterhöhungen um bis zum 200-fachen möglich.

Bei dem beschriebenen Getriebe können die Eingangs- und Ausgangswelle 2 bzw. 3 funktionell vertauscht werden, das heißt der Antrieb kann in die Welle 3 eingeleitet werden, wodurch die Welle 2 dann als Abtriebswelle fungiert.

Bei der gezeichneten Darstellung mit der Welle 2 als Antriebswelle übersetzt das Getriebe ins Langsame.

Bei den beschriebenen Getriebeausführungen können jeweils mehrere zweite Zahnräder 6 vorgesehen sein. Bei mehreren zweiten Zahnrädern 6 sind jeweils eine gleiche Anzahl an Planetenrädern 15 vorgesehen. Zweckmäßigerweise weist ein erfindungsgemäßes Getriebe mindestens vier zweite Zahnräder 6 mit einer entsprechenden Anzahl an Planetenrädern 15 auf.

Die zweiten Zahnräder 6 können axial in unterschiedlichen Ebenen auf dem ersten Zahnrad 5 kämmen, was schematisch für beispielsweise vier zweite Zahnräder 6 in Fig. 2 gezeigt ist.

Das Getriebegehäuse 1 ist zweigeteilt und durch Verbindungsflansche 17 zusammengehalten.

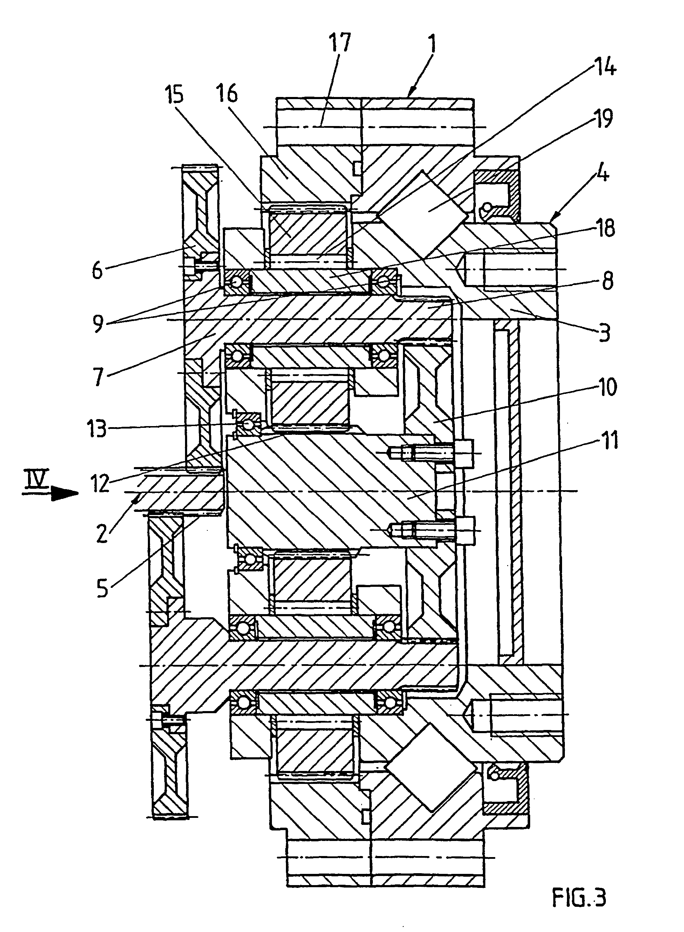

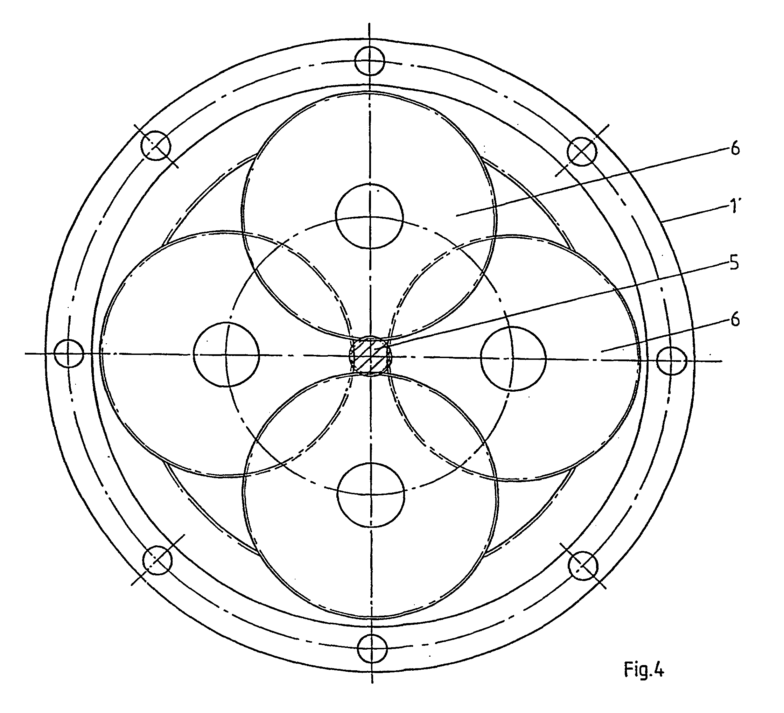

Beschreibung der Figuren 3 und 4:

Im Unterschied zu der Darstellung in den Figuren 1 und 2 sind in Fig. 3 und 4 die einzelnen, mit gleichen Bezugszahlen belegten Teile fertigungsgerecht konstruiert wiedergegeben.

Die Beschreibung des in den Fig. 1 und 2 schematisch dargestellten Getriebes gilt sinngemäß auch für die praktische Ausführung nach Fig. 3 und 4, weshalb die Teile mit identischen Bezugszeichen hier nicht nochmals von Grund auf beschrieben werden.

Die nachfolgenden Angaben beschränken sich auf Merkmale, die entweder aus der Zeichnung nicht ausreichend entnehmbar oder spezieller konstruktiver Art sind, die über die schematische Darstellung in Fig. 1 und 2 hinausgehen.

Hierbei handelt es sich im einzelnen um folgendes.

Das Getriebe besitzt insgesamt jeweils vier zweite und dritte Zahnräder 6 bzw. 8 sowie ebenso viele Planetenräder 15. Das Lager 14 ist als ein Nadellager ausgebildet.

Die Ausgangswelle 3 ist integrierter Bestandteil des Umlaufträgers 4. Der Umlaufträger 4 ist in dem Getriebegehäuse 1 über ein Kreuzrollenlager 19 gelagert. Die Laufbahnflächen dieses Kreuzrollenlagers 19 sind aus Gründen einer kompakten kleinen Bauweise des Getriebes direkt in die Gegenlaufpartner, das heißt Umlaufträger 4 und Getriebegehäuse 1, eingearbeitet. Das Getriebegehäuse 1 ist in axialer Richtung geteilt und durch Schrauben 17 miteinander verbunden. Zur Montage des Kreuzrollenlagers 19 ist in dem Getriebegehäuse 1 eine in das Innere des Lagers 19 führende, verschließbare Eintrittsöffnung (nicht dargestellt) vorgesehen, durch die die einzelnen Rollen dieses Lagers 19 zusammen mit gegenseitigen Abstandshaltern einfach eingeführt werden können.

**Patentansprüche**

1. Mehrstufiges Zahnradgetriebe mit einem Getriebegehäuse (1) und den Merkmalen

   - um eine gemeinsame Getriebeachse (A) rotieren

      - eine Eingangs- und eine Ausgangswelle (2 bzw. 3),
      - ein mit der Eingangswelle (2) fest verbundenes erstes Zahnrad (5),
      - ein viertes und fünftes Zahnrad (10 bzw. 12) mit einer gegenseitigen festen Verbindung und

   - ein in dem Getriebegehäuse (1) gelagerter Umlaufträger (4),

   - um mindestens eine parallel zu der gemeinsamen Getriebeachse (A) verlaufende Planetenachse (B) rotieren

      - jeweils ein zweites und drittes Zahnrad (6 bzw. 8) mit einer gegenseitigen festen Verbindung und
      - jeweils ein Planetenrad (15),

   - die Planetenachse (B) rotiert um die gemeinsame Getriebeachse (A),

   - die Zahnradverbindungen aus zweitem und drittem Zahnrad (6, 8) einerseits und viertem und fünftem Zahnrad (10, 12) andererseits sind jeweils drehbar gelagert in dem Umlaufträger (4),

   - ein Hohlrad (16) ist fest mit dem Getriebegehäuse (1) verbunden,

   - es kämmen jeweils ineinander

      - das erste und mindestens ein zweites Zahnrad (5 bzw. 6),
      - mindestens ein drittes und das vierte Zahnrad (8 bzw. 10),
      - das fünfte und mindestens ein Planetenrad (12 bzw. 15) und
      - mindestens ein Planetenrad (15) in dem Hohlrad (16),

   - das mindestens eine Planetenrad (15) und das Hohlrad (16) sind in Richtung der gemeinsamen Getriebeachse (A) zwischen dem ersten und dem mindestens einen zweiten Zahnrad (5 bzw. 6) einerseits und dem mindestens einen dritten und dem vierten Zahnrad (8 bzw. 10) andererseits angeordnet, wozu die Verbindung zwischen dem zweiten und dritten Zahnrad (6 bzw. 8) ein diesen Zahnrädern zugeordnetes Planetenrad (15) in dessen Planetenachse (B) durchdringt.

2. Zahnradgetriebe nach Anspruch 1,
   **dadurch gekennzeichnet,**
   **daß** das mindestens eine Planetenrad (15) in einem Lager (14) rotiert, von dessen gegeneinanderlaufenden Teilen eines fest mit dem Planetenrad (15) und ein anderes mit dem Umlaufträger (4) jeweils fest verbunden sind.

3. Getriebe nach Anspruch 1 oder 2,
   **dadurch gekennzeichnet,**
   **daß** jeweils in voneinander getrennten Ebenen folgende Zahnräder ineinandergreifen:

   - erstes mit dem mindestens einen zweiten Zahnrad (6 bzw. 8),

- das mindestens eine dritte mit dem vierten Zahnrad (8 bzw. 10),
- das fünfte Zahnrad (12) mit dem Planetenrad (15).

4. Getriebe nach einem der vorhergehenden Ansprüche,
**dadurch gekennzeichnet,**
**daß** wenigstens zwei zweite Zahnräder (6) vorgesehen sind.

5. Getriebe nach Anspruch 4,
**dadurch gekennzeichnet,**
**daß** mehr als zwei zweite Zahnräder (6) vorgesehen und von diesen zumindest einzelne axial gegeneinander verschoben in dem ersten Zahnrad (5) kämmen.

6. Getriebe nach Anspruch 4 oder 5,
**dadurch gekennzeichnet,**
**daß** die Anzahl der zweiten Zahnräder (6) und der Planetenräder (15) übereinstimmt.

7. Getriebe nach einem der vorhergehenden Ansprüche,
**dadurch gekennzeichnet,**
**daß** die einzelnen Zahn- und Planetenräder folgende Durchmesser(D)-Verhältnisse aufweisen.

$$D_{Z1} < D_{Z2},$$

$$D_{z2} > D_{Z3},$$

$$D_{z3} < D_{Z4},$$

$$D_{z4} > D_{Z5},$$

$$D_{Z5} < D_p$$

mit

Z1 = erstes Zahnrad (5)
Z2 = zweites Zahnrad (6)
Z3 = drittes Zahnrad (8)
Z4 = viertes Zahnrad (10)
Z5 = fünftes Zahnrad (12)
P = Planetenrad.

8. Getriebe nach einem der vorhergehenden Ansprüche,
**dadurch gekennzeichnet,**
**daß** der Umlaufträger (4) über ein Kreuzrollenlager (19) in dem Getriebegehäuse (1) gelagert ist, wobei die Laufbahnflächen der Kreuzrollen dieses Lagers direkt in das Material des Umlaufträgers (4) und des Getriebegehäuses (1) eingearbeitet sind.

9. Getriebe nach einem der vorhergehenden Ansprüche,
**dadurch gekennzeichnet,**
**daß** die Eingangs- und Ausgangswelle (2 bzw. 3) miteinander vertauscht sind.

**Claims**

1. A multistage toothed gearing having a gear housing (1) and the features:

- rotating about a common gearing axis (A):

  - one input shaft and one output shaft (2 and 3),
  - a first gearwheel (5) which is fixedly connected to the input shaft (2),
  - a fourth and fifth gearwheel (10 and 12) having a mutual fixed connection, and
  - a rotating carrier (4) mounted in the gear housing (1),

- rotating about at least one planetary axis (B) running parallel to the common gearing axis (A),

  - one second and one third gearwheel (6 and 8) with a mutual fixed connection and
  - one planetary wheel (15) each,

- the planetary axis (B) rotates about the common gearing axis (A),
- the gearwheel connections of a second and third gearwheel (6, 8) on the one hand and the fourth and fifth gearwheel (10, 12) on the other hand are each rotationally mounted in the rotating carrier (4),
- a hollow wheel (16) is fixedly connected to the gear housing (1);
- intermeshing with one another:

  - the first gearwheel and at least one second gearwheel (5 and 6),
  - at least one third gearwheel and the fourth gearwheel (8 and 10),
  - the fifth gearwheel and at least one planetary wheel (12 and 15) and
  - at least one planetary wheel (15) and the hollow wheel (16),

- at least one planetary wheel (15) and the hollow wheel (16) are arranged in the direction of the common gearing axis (A) between the first gearwheel and at least one second gearwheel (5 or 6) on the one hand and the minimum of one third gearwheel and the fourth gearwheel (8 and 10) on the other hand, to which end the connection between the second and third gearwheels (6 and 8) passes through a planetary wheel (15) allocated for these gearwheels in its planetary axis (B).

2. The toothed gearing according to Claim 1, **characterized in that** the minimum of one planetary wheel (15) rotates in a bearing (14) of whose counterrotating parts, one is fixedly connected to the planetary wheel (15) and another is fixedly connected to the rotating carrier (4).

3. The gearing according to Claim 1 or 2, **characterized in that** the following gearwheels intermesh in separate planes:

   - the first gearwheel with at least one second gearwheel (6 and 8),
   - the minimum of one third gearwheel with the fourth gearwheel (8 and 10),
   - the fifth gearwheel (12) with the planetary wheel (15).

4. The gearing according to one of the preceding claims, **characterized in that** at least two second gearwheels (6) are provided.

5. The gearing according to Claim 4, **characterized in that** more than two second gearwheels (6) are provided, and of these, at least individual gearwheels which are offset axially relative to one another mesh with the first gearwheel (5).

6. The gearing according to Claim 4 or 5, **characterized in that** the number of second gearwheels (6) matches the number of planetary wheels (15).

7. The gearing according to one of the preceding claims, **characterized in that** the individual gearwheels and planetary wheels have the following diameter (D) ratios:

$$D_{Z1} < D_{Z2},$$

$$D_{Z2} > D_{Z3},$$

$$D_{Z3} < D_{Z4},$$

$$D_{z4} > D_{Z5},$$

$$D_{z5} < D_p$$

where

Z1 = first gearwheel (5)
Z2 = second gearwheel (6)
Z3 = third gearwheel (8)
Z4 = fourth gearwheel (10)
Z5 = fifth gearwheel (12)
P = planetary wheel.

8. The gearing according to one of the preceding claims, **characterized in that** the rotating carrier (4) is mounted in the gear housing (1) over a cross-roller bearing (19), whereby the raceway surfaces of the cross-rollers of this bearing are incorporated directly into the material of the rotating carrier (4) and its gear housing (1).

9. The gearing according to one of the preceding claims, **characterized in that** the input shaft and the output shaft (2 and 3) are interchangeable.

## Revendications

1. Transmission par engrenages à plusieurs étages comprenant une boîte de transmission (1) et les caractéristiques suivantes :

   - autour d'un axe de transmission (A) commun tournent

     - un arbre d'entrée et un arbre de sortie (2 et 3),
     - une première roue dentée (5) liée fixement à l'arbre d'entrée (2),
     - une quatrième et une cinquième roue dentée (10 et 12) liées fixement entre elles, et
     - un support rotatif (4) monté dans la boîte de transmission (1),

   - autour d'au moins un axe planétaire (B) parallèle à l'axe de transmission (A) commun tournent

     - à chaque fois une deuxième et une troisième roue dentée (6 et 8) liées fixement entre elles, et
     - à chaque fois une roue planétaire (15),

   - l'axe planétaire (B) tourne autour de l'axe de transmission (A) commun,
   - les assemblages de roues dentées formés par la deuxième et troisième roue dentée (6, 8), d'un côté, et par la quatrième et cinquième roue dentée (10, 12), d'un autre côté, sont respectivement montés tournants dans le support rotatif (4),

- une roue à denture intérieure (16) est liée fixement à la boîte de transmission (1),
- à chaque fois engrènent les unes dans les autres,

  - la première et au moins une deuxième roue dentée (5 et 6),
  - au moins une troisième et la quatrième roue dentée (8 et 10),
  - la cinquième roue dentée et au moins une roue planétaire (12 et 15)
  - au moins une roue planétaire (15) dans la roue à denture intérieure,

- la au moins une roue planétaire (15) et la roue à denture intérieure (16) sont disposées dans la direction de l'axe de transmission (A) commun entre la première et au moins une deuxième roue dentée (5 et 6), d'un côté, et entre au moins une troisième et la quatrième roue dentée (8 et 10), d'un autre côté, l'assemblage entre la deuxième et la troisième roue dentée (6 et 8) pénétrant à cet effet au travers d'une roue planétaire (15), associée à ces roues dentées, dans l'axe planétaire (B) de celle-ci.

2. Transmission par engrenages suivant la revendication 1, **caractérisée en ce que** la au moins une roue planétaire (15) tourne dans un palier (14) dont l'un des éléments en rotation mutuelle est lié fixement à la roue planétaire (15) et un autre au support rotatif (4).

3. Transmission suivant l'une des revendications 1 et 2, **caractérisée en ce que** les roues dentées suivantes engrènent respectivement les unes dans les autres dans des plans séparés les uns des autres :

   - la première roue dentée avec au moins une deuxième roue dentée (6 et 8),
   - au moins une troisième roue dentée avec la quatrième roue dentée (8 et 10),
   - la cinquième roue dentée (12) avec la roue planétaire (15).

4. Transmission suivant l'une des revendications précédentes, **caractérisée en ce qu'**au moins deux deuxièmes roues dentées (6) sont prévues.

5. Transmission suivant la revendication 4, **caractérisée en ce que** plus de deux deuxièmes roues dentées (6) sont prévues, et parmi celles-ci au moins des roues individuelles mutuellement décalées axialement engrènent dans la première roue dentée (5).

6. Transmission suivant l'une des revendications 4 et 5, **caractérisée en ce que** le nombre des deuxièmes roues dentées (6) et des roues planétaires (15) coïncide.

7. Transmission suivant l'une des revendications précédentes, **caractérisée en ce que** les roues dentées et planétaires individuelles présentent les rapports de diamètres (D) suivants :

$$D_{Z1} < D_{Z2},$$

$$D_{Z2} > D_{Z3},$$

$$D_{Z3} < D_{Z4},$$

$$D_{Z4} > D_{Z5},$$

$$D_{Z5} < D_p$$

avec

Z1 = première roue dentée (5)
Z2 = deuxième roue dentée (6)
Z3 = troisième roue dentée (8)
Z4 = quatrième roue dentée (10)
Z5 = cinquième roue dentée (12)
P = roue planétaire

8. Transmission suivant l'une des revendications précédentes, **caractérisée en ce que** le support rotatif (4) est monté dans la boîte de transmission (1) par l'intermédiaire d'un roulement à rouleaux croisés (19), les surfaces de roulement des rouleaux croisés de ce palier étant directement incorporées dans le matériau du support rotatif (4) et de la boîte de transmission (1).

9. Transmission suivant l'une des revendications précédentes, **caractérisée en ce que** l'arbre d'entrée et l'arbre de sortie (2 et 3) sont permutés entre eux.

Fig. 1

Fig. 2

FIG.3

Fig.4